# NEUE EUROPÄISCHE PATENTSCHRIFT

(11) **EP 3 080 566 B2**
(45) Veröffentlichungstag und Bekanntmachung des Hinweises auf die Entscheidung über den Einspruch: **27.08.2025**
(45) Hinweis auf die Patenterteilung: 27.04.2022
(21) Anmeldenummer: 14802842.6
(22) Anmeldetag: 17.11.2014
(51) Int. Cl.: G01G 23/01, G01G 23/37

(54) **VERFAHREN ZUM ANZEIGEN EINES WÄGEERGEBNISSES EINER WAAGE**
METHOD FOR DISPLAYING THE WEIGHING RESULT OF A SCALE
PROCÉDÉ POUR L'AFFICHAGE D'UN RÉSULTAT DE PESÉE D'UNE BALANCE

(30) Priorität: 23.01.2014 DE 102014100754
(43) Veröffentlichungstag der Anmeldung: 19.10.2016
(60) Teilanmeldung: 22162688.0
(73) Patentinhaber: Bizerba SE & Co. KG, 72336 Balingen (DE)
(72) Erfinder: MOSER, Jürgen, 72469 Meßstetten (DE)
(74) Vertreter: Manitz Finsterwald Patent- und Rechtsanwaltspartnerschaft mbB
(86) Internationale Anmeldenummer: PCT/EP2014/074770
(87) Internationale Veröffentlichungsnummer: WO 2015/110197

(56) Entgegenhaltungen:
- EP-A2- 2 660 572
- WO-A1-02/18887
- DE-A1- 102006 047 711
- DE-A1- 102008 019 311
- DE-A1- 102009 007 733
- DE-U1- 202005 015 304
- DE-U1- 202012 102 486
- KR-B1- 101 323 595
- US-A1- 2015 101 038
- ANONYMOUS: "Wägeraum", WÄGERAUM, AUSGABE 18, 1 January 2006 (2006-01-01), pages 1 - 32, XP093025016
- ANONYMOUS .: "Betriebsanleitung, Sartorius Funkschnittstellen für drahtlose Kommunikation", SARTORIUS, 1 January 2006 (2006-01-01), pages 1 - 2, XP093025019
- ANONYMOUS: "Betriebsanleitung, Sartorlus OPC Server (62890PC, 62890PC-L)", SARTORIUS, 1 February 2011 (2011-02-01), pages 1 - 16, XP093025023
- ANONYMOUS .: "Operating Instructions Sartorlus OPC Scale (62890 PC, 6289 PC-L) ", SARTORIUS, 1 January 2011 (2011-01-01), pages 1 - 21, XP093025026
- ANONYMOUS: "Anwender-Handbuch Sartorlus Cubis-Serie Elektronische Semimikro-, Mikro-, Przisions-und Analysenwaagen Modelle MSA", SATORIUS, 1 November 2013 (2013-11-01), pages 1 - 4, XP093025030

## Beschreibung

Die vorliegende Erfindung betrifft ein Verfahren zur Anzeige eines Wägeergebnisses einer Waage, nämlich Ladenwaage.

Waagen, insbesondere Ladenwaagen, kommen in Einzelhandelsgeschäften, beispielsweise Supermärkten, zum Einsatz, um Lebensmittel wie Käse, Fleisch, Wurst oder dergleichen, die in einer Lebensmittelthekeausgestelltsind,zuwiegen.Darüberhinauskönnen Waagen auch in einem Selbstbedienungsbereich, beispielsweise für Obst und Gemüse, oder in einem Frische-Verkauf aufgestellt sein. Dabei ist eine kompakte Bauweise der Waagen aufgrund der für die Anzeige der Wägeergebnisse erforderlichen Anzeigevorrichtungen oftmals nicht möglich.

Das Dokument DE 10 2008 019 311 A1 betrifft ein Verfahren zum Wiegen beliebiger Güter mit einer Waage. Daten werden an ein EDV-Gerät übertragen und zur Überprüfung auf Manipulation an die Waage rückgekoppelt. Die Übertragung und/oder Rückkopplung der Daten kann über eine Funkverbindung oder über das Internet erfolgen. Eine kabellose Übertragung kann mittels WLAN oder UMTS erfolgen. Das Dokument DE 10 2009 007 733 A1 betrifft ein Verfahren zum Wägen eines Wägeguts, wobei insbesondere ein Wägemodul als tragbares Modul zur Wägung von Gold, Edelsteinen oder Rezepturkomponenten verwendet wird. Das Display eines Mobiltelefons bildet hierbei das Anzeigedisplay bzw. die Anzeigefläche der Waage. Das Dokument WO 02/18887 A1 betrifft ein Verfahren zum Betreiben einer Waage bzw. eines Wagenverbunds, bei dem unter Gewährleistung der Eichsicherheit die Übertragung von eichpflichtigen Daten zwischen einzelnen Programmteilen oder Geräten unter Verwendung frei programmierbarer und nicht eichpflichtiger Programme möglich ist. Das Dokument KR 10-1323595 B1 betrifft ein Verfahren, bei dem eine Kennung einer Waage auf einem mobilen Terminal angezeigt wird.

Der Erfindung liegt die Aufgabe zugrunde, eine Möglichkeit anzugeben, Waagen möglichst kompakt zu gestalten.

Diese Aufgabe wird gelöst durch ein Verfahren zur Anzeige eines Wägeergebnisses einer eine Kennung aufweisenden Waage auf einem mobilen Anzeigegerät, bei dem das mobile Anzeigegerät eine sichere, insbesondere verschlüsselte drahtlose Kommunikationsverbindung mit der Waage aufbaut und nach erfolgreichem Verbindungsaufbau die Kennung der Waage anzeigt. Insbesondere handelt es sich bei der Kennung um eine eindeutige Kennung und/oder bei der Waage um eine eichpflichtige Waage.

Die Waage muss demnach keine eigene Anzeigevorrichtung aufweisen, sondern diese wird von dem Benutzer, insbesondere Kunden, in Form eines mobilen Anzeigegeräts, beispielsweise eines Mobiltelefons, insbesondere Smartphones, oder Tablets, selbst mitgebracht oder wird vor Ort geliehen. Grundsätzlich kann die Waage aber auch weiterhin eine eigene Anzeigevorrichtung aufweisen. Bei der Waage handelt es sich insbesondere um einen Lastaufnehmer bzw. eine Lastplatte.

Um ein Wägeergebnis der Waage auf dem mobilen Anzeigegerät anzuzeigen, baut das mobile Anzeigegerät zunächst eine sichere Kommunikationsverbindung mit der Waage auf. Unter einer sicheren Verbindung ist zumindest eine verschlüsselte Verbindung zu verstehen. Insbesondere kann ein gemeinsamer Verbindungsschüssel erzeugt werden, der für eine gegenseitige Authentifizierung und/oder eine Verschlüsselung der zwischen den beiden Geräten ausgetauschten Daten verwendet wird. Dies wird bei einer Bluetooth-Verbindung, insbesondere unter Verwendung einer PIN, auch als "pairing" bezeichnet. Bei einer Netzwerkverbindung erfolgt das Herstellen einer gesicherten Verbindung z.B. mittels des bekannten SSL-Handshake-Protokolls, wobei zur Authentifizierung der Waage ein Zertifikat verwendet wird und anschließend ein symmetrischer Sitzungsschlüssel erzeugt wird. Der Verbindungsaufbau kann sowohl von dem mobilen Anzeigegerät als auch von der Waage initiiert werden.

Anschließend ist es von Vorteil, wenn es für den Benutzer auch ersichtlich ist, dass das mobile Anzeigegerät angebunden ist. Wenn mehrere Waagen vorhanden sind, wie dies beispielsweise in einem Selbstbedienungsbereich in einem Supermarkt der Fall sein kann, ist es weiterhin von Vorteil, wenn für den Benutzer auch ersichtlich ist, an welche der mehreren Waagen das mobile Anzeigegerät angebunden ist. Daher wird vorgeschlagen, die Kennung der verbundenen Waage auf dem mobilen Anzeigegerät anzuzeigen. Bei der Anzeige kann es sich insbesondere um eine Anzeige auf einem Touchscreen oder Display des mobilen Anzeigegeräts handeln, z.B. in Form einer Nummer, eines Symbol oder eines Blinklichts, das der angezeigten Waage zugeordnet ist.

Bevorzugt wird, insbesondere nach Anzeige der Kennung der verbundenen Waage auf dem mobilen Anzeigegerät, bevorzugt automatisch geprüft, insbesondere durch die Waage, ob das mobile Anzeigegerät einem für eine vorgegebenen Anforderungen genügende Anzeige der Wägeergebnisse zugelassenen Gerätemodell entspricht. Dies ist insbesondere bei eichpflichtigen Waagen der Vorteil, die eichrechtlichen Vorschriften hinsichtlich der Darstellung der eichpflichtigen Daten, z.B. Gewicht und Preis, unterliegen, insbesondere hinsichtlich der Größe, insbesondere Minimalgröße, der Darstellung der eichpflichtigen Daten. Zur Prüfung, ob es sich bei dem mobilen Anzeigegerät um ein insbesondere von dem Hersteller der Waage zugelassenes Gerätemodell handelt, kann auf einen Speicher oder eine Datenbank oder dergleichen zugegriffen werden, in dem oder der die zugelassenen Gerätemodelle hinterlegt sind.

Sofern das mobile Anzeigegerät einem zugelassen Gerätemodell entspricht, wird insbesondere ermöglicht, dass ein Wägeergebnis der verbundenen Waage auf dem mobilen Anzeigegerät insbesondere eichsicher angezeigt wird, insbesondere unter Verwendung von dem Gerätemodell zugeordneten Anzeigeparametern. Die technischen Maßnahmen, um ein Wägeergebnis vorgegebenen Anforderungen genügend auf dem mobilen Anzeigegerät anzuzeigen oder eine derartige Anzeige zu unterbinden, liegen im Griffbereich des auf dem vorliegenden Fachgebiet tätigen Fachmanns.

Sofern das mobile Anzeigegerät keinem zugelassen Gerätemodell entspricht, ist es bevorzugt, wenn die Hardware-Parameter des mobilen Anzeigegeräts, insbesondere Auflösung und Punktedichte, gelesen werden, insbesondere durch das mobile Anzeigegerät, und anhand der Hardware-Parameter wird geprüft, insbesondere durch die Waage, ob auf dem mobilen Anzeigegerät eine den vorgegebenen Anforderungen genügende Anzeige der Wägeergebnisse möglich ist.

Dabei ist es bevorzugt, wenn basierend auf den Hardware-Parametern ein Zoom-Faktor ermittelt wird, mit dem eine den vorgegebenen Anforderungen genügende Anzeige der Wägeergebnisse möglich ist. Üblicherweise wird der Zoom-Faktor einen Wert größer 1 besitzen, kann grundsätzlich aber auch einen Wert kleiner 1 besitzen.

Es ist auch möglich, dass - sofern das mobile Anzeigegerät keinem zugelassen Gerätemodell entspricht - auf dem mobilen Anzeigegerät ein Referenzbild angezeigt und basierend auf einem Vergleich des Referenzbilds mit einem realen Maß ein Zoom-Faktor ermittelt wird, mit dem eine den vorgegebenen Anforderungen genügende Anzeige der Wägeergebnisse möglich ist. Beispielsweise kann auf dem mobilen Anzeigegerät eine Maßstabsleiste oder dergleichen dargestellt werden, die von dem Benutzer mit einer realen Längenskale verglichen wird, um den Zoom-Faktor zu ermitteln, der erforderlich ist, um ein Wägeergebnis, d.h. insbesondere ein Gewicht und einen Preis, in einer eichrechtlich erforderlichen Größe auf dem mobilen Anzeigegerät darzustellen.

Sofern eine den vorgegebenen Anforderungen genügende Anzeige möglich ist, wird insbesondere ermöglicht, dass ein Wägeergebnis der verbundenen Waage auf dem mobilen Anzeigegerät insbesondere eichsicher angezeigt wird, insbesondere unter Verwendung von anhand von Hardware-Parametern und/oder eines Zoom-Faktors bestimmten Anzeigeparametern.

Bevorzugt ist die drahtlose Kommunikationsverbindung eine insbesondere standardisierte drahtlose Netzwerkverbindung, insbesondere eine WLAN-Verbindung, unter Verwendung eines insbesondere standardisierten sicheren Netzwerkprotokolls, insbesondere HTTPS. Grundsätzlich kann aber beispielsweise auch eine Bluetooth-Verbindung verwendet werden, wobei es dann aber üblicherweise erforderlich sein wird, die Verbindung bei der erstmaligen Verbindungsaufnahme interaktiv zu bestätigen, was beispielsweise bei Verwendung von vor Ort leihbaren, vorkonfigurierten mobilen Anzeigegeräten durchaus denkbar ist.

Das mobile Anzeigegerät kann einen Webbrowser und die Waage kann einen Webserver umfassen. Gemäß einer bevorzugten Ausführungsform wird die Kennung der Waage und/oder das Wägeergebnis der Waage über eine insbesondere mobile Webapplikation auf dem mobilen Anzeigegerät angezeigt. Dabei kann die Webapplikation in einem Webbrowser des mobilen Anzeigegeräts, insbesondere unter Verwendung eines Plug-ins oder unter Verwendung von HTML, ausgeführt werden. Bei Verwendung einer Webapplikation ist eine separate Applikationssoftware nicht erforderlich.

Bei mehreren Waagen, mit denen das mobile Anzeigegerät eine sichere drahtlose Kommunikationsverbindung aufgebaut hat, ist es bevorzugt, wenn die Kennungen aller Waagen, insbesondere in Form einer Liste, auf dem mobilen Anzeigegerät angezeigt werden. Der Benutzer kann dann zwischen den einzelnen Waagen auswählen. Dies ist insbesondere dann von Vorteil, wenn sich in der Umgebung des Bedieners mehrere Waagen befinden. Es kann z.B. eine Liste zur interaktiven Auswahl angeboten werden.

Grundsätzlich kann die Auswahl manuell erfolgen, beispielsweise wenn das mobile Anzeigegerät einen Touchscreen aufweist. Die Auswahl kann dann durch Berühren des Touchscreen an der Stelle, an der die auszuwählende Kennung angezeigt wird, erfolgen. Die Auswahl kann aber auch durch technische Hilfsmittel erfolgen oder unterstützt werden, beispielsweise durch Erfassen, insbesondere. Fotografieren und/oder Scannen einer auf der auszuwählenden Waage angebrachten Kennzeichnung, insbesondere eines Barcodes. Die Auswahl kann aber auch z.B. mittels Nahfeldkommunikation (NFC) erfolgen. Der Benutzer nähert sich mit dem mobilen Anzeigegerät der auszuwählenden Waage entsprechend weit an oder berührt diese mit dem mobilen Anzeigegerät, so dass eine Kennzeichnung der Waage in Form von NFC-Daten an das mobile Anzeigegerät übermittelt werden kann. Zur Auswahl einer Waage bzw. einer Kennung kann also eine der Kennung der auszuwählenden Waage entsprechende oder eindeutig zugeordnete Kennzeichnung mittels eines von der sicheren drahtlosen Kommunikationsverbindung separaten Mittels bzw. Übertragungswegs, insbesondere Bildverarbeitung, wie z.B. Fotografieren und/oder Scannen, oder Datenübertragung über kurze Distanz, wie z.B. Nahfeldkommunikation oder Infrarot oder Bluetooth, von dem mobilen Anzeigegerät empfangen bzw. an das mobile Anzeigegerät übermittelt werden. Die übermittelte Kennzeichnung kann dann mit den angezeigten Kennungen verglichen werden, um die auszuwählende Waage auszuwählen.

Dabei ist es bevorzugt, wenn nach Auswahl der Waage bzw. der Kennung nur der Waage bzw. der der ausgewählten Kennung zugeordneten Waage ermöglicht wird, ein Wägeergebnis auf dem mobilen Anzeigegerät anzuzeigen. Die weiteren Waagen können mit dem mobilen Anzeigegerät zwar verbunden sein, jedoch ist für diese Waagen eine Anzeige eines Wägeergebnisses auf dem Anzeigegerät nicht möglich. Darüber hinaus kann die Auswahl der Waage bzw. der Kennung änderbar sein. Sofern das mobile Anzeigegerät mit einer anderen Waage verbunden werden soll, kann dies beispielsweise interaktiv oder durch Annähern an die neu auszuwählende Waage erfolgen.

Das Wägeergebnis kann auf dem mobilen Anzeigegerät insbesondere zusätzlich als Barcode insbesondere eichsicher angezeigt werden. Der Barcode kann dann an einem Kassensystem beispielsweise eines Supermarkts direkt von dem mobilen Anzeigegerät eingelesen werden. Alternativ oder zusätzlich kann das Wägeergebnis auch von der Waage an ein Kassensystem übertragen werden. Grundsätzlich ist es jedoch auch möglich, dass an die jeweilige Waage ein Drucker angeschlossen ist, der einen Papierausdruck des jeweiligen Wägeergebnisses erzeugt.

Weiter Gegenstand der Erfindung ist ein Computerprogramm mit Programmcode-Mitteln, um das vorstehend erläuterte Verfahren durchzuführen, wenn das Programm auf einem mobilen Anzeigegerät ausgeführt wird. Bei dem Computerprogramm handelt es sich insbesondere um eine Webanwendung oder um eine Applikationssoftware für Mobilgeräte, insbesondere für mobile Anzeigegeräte. Die Applikationssoftware kann beispielsweise über eine WLAN-Verbindung oder über ein Telekommunikationsnetz und/oder das Internet auf das Mobilgerät heruntergeladen werden. Die Applikationssoftware wird von dem Mobilgerät ausgeführt. Die Applikationssoftware ist bevorzugt von dem Hersteller der Waage für die die Anzeige der Wägeergebnisse der Waage zugelassen.

Weitere vorteilhafte Ausgestaltungen der Erfindung sind in den Unteransprüchen, der weiteren Beschreibung und der Zeichnung beschrieben.

Ein nicht beschränkendes Ausführungsbeispiel der Erfindung ist in der Zeichnung dargestellt und wird nachfolgend beschrieben.

Es zeigen, jeweils in schematischer Darstellung,
- Fig. 1: eine Kombination aus einer Waage und einem mobilen Anzeigegerät, die drahtlos miteinander verbunden sind,
- Fig. 2: ein mobiles Anzeigegerät, das die Kennung einer angebundenen Waage und ein zugehöriges Wägeergebnis anzeigt, und
- Fig. 3: ein Flussdiagramm zur Darstellung des erfindungsgemäßen Verfahrens.

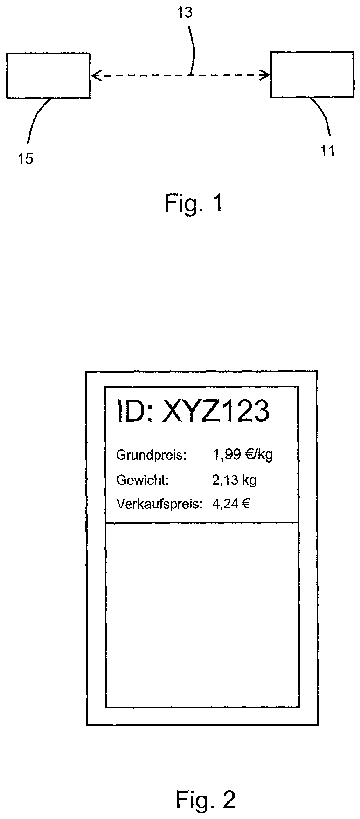

In Fig. 1 ist eine Ladenwaage 11 dargestellt, die in einem Selbstbedienungs-Bereich eines Supermarkts aufgestellt ist. Bei der Waage 11 handelt es sich um eine eichpflichtige bzw. eichtechnisch zugelassene Waage, d.h. eine Waage, die auf Einhaltung gesetzlicher eichrechtlicher Vorschriften geprüft ist. Die Waage 11 besitzt keine eigene Anzeigevorrichtung, um ein Wägeergebnis, sei es mit oder ohne Preisrechnung, auf der Waage 11 anzuzeigen. Die Waage 11 besitzt aber eine der Waage 11 zugewiesene eindeutige ID, anhand der die Waage 11 eindeutig identifizierbar ist. Die ID der Waage 11 ist in einem Speicher der Waage 11 elektronisch hinterlegt und zusätzlich für den Kunden sichtbar außen an der Waage 11 angebracht.

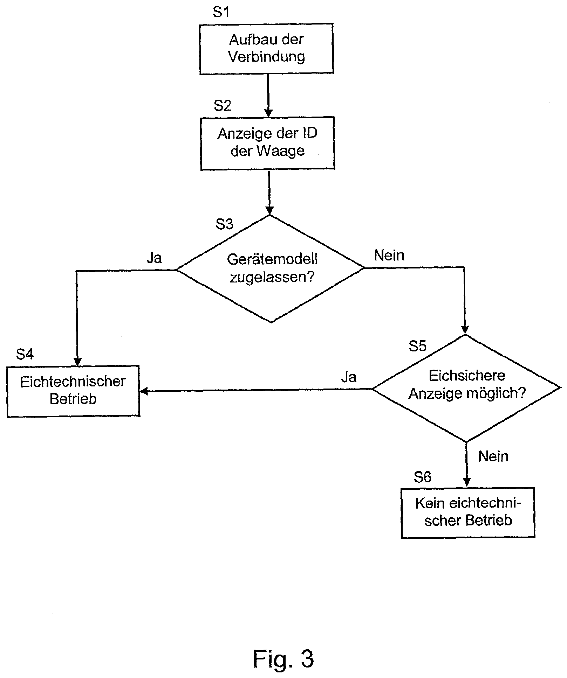

Zur Anzeige eines Wägeergebnisses der Waage 11 wird ein kabellos angebundenes Anzeigegerät 15 verwendet, mit dem die Waage 11 über eine sichere bidirektionale Verbindung 13, insbesondere eine WLAN-Verbindung, verbunden ist. Die Waage 11 umfasst einen Webserver, auf dem eine Webanwendung gespeichert ist, die in einem Webbrowser des mobilen Anzeigegeräts 15 eines Kunden, wie beispielsweise einem Tablet, unter Verwendung eines Plug-ins ausgeführt werden kann und die gemäß den nachstehend in Verbindung mit Fig. 3 erläuterten Schritten S1-S6 die Anzeige eines Wägeergebnisses auf dem Anzeigegerät 15 ermöglicht. Insbesondere handelt es sich bei dem Plug-In um ein Plug-In, das von dem Hersteller der Waage 11 für die Anzeige der Wägeergebnisse der Waage 11 zugelassen ist.

Wie aus Fig. 3 ersichtlich ist, wird gemäß Schritt S1 zunächst zwischen dem mobilen Anzeigegerät 15 und der Waage 11 eine verschlüsselte Kommunikationsverbindung 13 aufgebaut. Nach erfolgreichem Verbindungsaufbau wird gemäß Schritt S2 die ID der Waage 11, in dem vorliegenden Fall XYZ123, über die Verbindung 13 elektronisch an das mobile Anzeigegerät 15 übermittelt und dort angezeigt. Der Kunde kann dann durch Vergleich der auf seinem mobilen Anzeigegerät 15 dargestellten ID mit der außen auf der Waage 11 angebrachten ID zweifelsfrei feststellen, mit welcher Waage sein mobiles Anzeigegerät 15 verbunden ist.

Anschließend wird gemäß Schritt S3 geprüft, ob das mobile Anzeigegerät 15 einem dem Hersteller der Waage 11 bekannten und von diesem für die Anzeige eines Wägeergebnisses freigegebenen bzw. qualifizierten Gerätemodell entspricht. Bei einem derartigen Gerätemodell wurde von dem Hersteller der Waage 11 bereits verifiziert, dass eine den eichrechtlichen Vorgaben entsprechende Anzeige auf dem Gerätemodell möglich ist. Sofern dies der Fall ist, wird gemäß Schritt S4 der eichtechnische Betrieb zwischen der Waage 11 und dem mobilen Anzeigegerät 15 freigegeben, und ein Wägeergebnis der Waage 11 kann zusammen mit der ID der verbundenen Waage 11 auf dem mobilen Anzeigegerät 15 angezeigt werden (vgl. Fig. 2) und gegebenenfalls von der Waage 11 zusätzlich an ein Kassensystem übertragen werden. Das Wägeergebnis kann zusätzlich auch noch als Barcode auf dem mobilen Anzeigegerät 15 angezeigt werden, und der Barcode kann dann an einem Kassensystem direkt von dem mobilen Anzeigegerät 15 eingelesen werden.

Ist das Gerätemodell hingegen bei dem Hersteller der Waage 11 weder bekannt noch von dem Hersteller für den Betrieb mit der Waage 11 freigegeben bzw. zugelassen worden, werden gemäß Schritt S5 die Hardware-Parameter des mobilen Anzeigegeräts 15 gelesen, und es wird anhand der Hardware-Parameter geprüft, ob auf dem mobilen Anzeigegerät 15 eine den eichrechtlichen Bestimmungen genügende Anzeige der Wägeergebnisse möglich ist. Sofern dies der Fall ist, wird der eichtechnische Betrieb, wie er in Schritt S4 dargestellt ist, ermöglicht. Ist dies hingegen nicht der Fall, wird gemäß Schritt S6 ein eichtechnischer Betrieb des mobilen Anzeigegeräts 15 mit der Waage 11 unterbunden. Durch die Waage 11 aufgenommene Wägeergebnisse können dann nicht auf dem mobilen Anzeigegerät 15 angezeigt werden.

Sind mehrere Waagen in einem Selbstbedienungs-Bereich aufgestellt, können die Kennungen aller in Kommunikationsreichweite für die sichere drahtlose Kommunikationsverbindung befindlichen Waagen auf dem mobilen Anzeigegerät 15 angezeigt werden. Der Kunde wählt dann aus, mit welcher der Waagen ein eichtechnischer Betrieb erfolgen soll. Ob ein eichtechnischer Betrieb zwischen der ausgewählten Waage und dem mobilen Anzeigegerät tatsächlich erfolgen kann, bemisst sich anhand der vorstehend erläuterten Entscheidungen S3 und S5. Die Auswahl der Waage kann beispielsweise dadurch erfolgen, dass auf sämtlichen der Waagen ein Barcode angebracht ist, die der jeweiligen ID der jeweiligen Waage entsprechen bzw. diese beinhalten, und die auszuwählende Waage durch Scannen des Barcodes und automatischen Vergleich der gescannten Kennzeichnung der Waage mit den über die sichere drahtlose Kommunikationsverbindung erhaltenen IDs ausgewählt wird. Grundsätzlich kann die getroffene Auswahl nach dem erläuterten Verfahren auch geändert werden.

Durch die vorliegende Erfindung wird ermöglicht, das Wägeergebnis einer Ladenwaage eichtechnischen Vorschriften entsprechend auf von den Kunden selbst mitgeführten Mobilgeräten darzustellen.

### Bezugszeichenliste

- 11: Waage
- 13: Kommunikationsverbindung
- 15: mobiles Anzeigegerät
- S1-S6: Schritt

## Patentansprüche

1. Verfahren zur Anzeige eines Wägeergebnisses einer eine Kennung aufweisenden Waage (11), nämlich Ladenwaage, auf einem mobilen Anzeigegerät (15), bei dem das mobile Anzeigegerät (15) eine sichere drahtlose Kommunikationsverbindung (13) mit der Waage (11) aufbaut und nach erfolgreichem Verbindungsaufbau ein Wägeergebnis der Waage (11) zusammen mit der Kennung der Waage (11) anzeigt, wobei die Kennung eine der Waage (11) zugewiesene eindeutige ID ist, anhand der die Waage (11) eindeutig identifizierbar ist.

2. Verfahren nach Anspruch 1,
**dadurch gekennzeichnet,**
**dass** geprüft wird, ob das mobile Anzeigegerät (15) einem für eine vorgegebenen Anforderungen genügende Anzeige der Wägeergebnisse zugelassenen Gerätemodell entspricht.

3. Verfahren nach Anspruch 2,
**dadurch gekennzeichnet,**
**dass** - sofern das mobile Anzeigegerät (15) einem zugelassen Gerätemodell entspricht - ermöglicht wird, dass ein Wägeergebnis der verbundenen Waage (11) auf dem mobilen Anzeigegerät (15) angezeigt wird.

4. Verfahren nach Anspruch 2 oder 3,
**dadurch gekennzeichnet,**
**dass** - sofern das mobile Anzeigegerät (15) keinem zugelassen Gerätemodell entspricht - anhand der von dem mobilen Anzeigegerät (15) ausgelesenen Hardware-Parameter des mobilen Anzeigegeräts geprüft wird, ob auf dem mobilen Anzeigegerät (15) eine den vorgegebenen Anforderungen genügende Anzeige der Wägeergebnisse möglich ist.

5. Verfahren nach Anspruch 4,
**dadurch gekennzeichnet,**
**dass** basierend auf den Hardware-Parametern ein Zoom-Faktor ermittelt wird, mit dem eine den vorgegebenen Anforderungen genügende Anzeige der Wägeergebnisse möglich ist.

6. Verfahren nach zumindest einem der Ansprüche 2 bis 5,
**dadurch gekennzeichnet,**
**dass** - sofern das mobile Anzeigegerät (15) keinem zugelassen Gerätemodell entspricht - auf dem mobilen Anzeigegerät (15) ein Referenzbild angezeigt und basierend auf einem Vergleich des Referenzbilds mit einem realen Maß ein Zoom-Faktor ermittelt wird, mit dem eine den vorgegebenen Anforderungen genügende Anzeige der Wägeergebnisse möglich ist.

7. Verfahren nach zumindest einem der Ansprüche 4 bis 6,
**dadurch gekennzeichnet,**
**dass** - sofern eine den vorgegebenen Anforderungen genügende Anzeige möglich ist - ermöglicht wird, dass ein Wägeergebnis der verbundenen Waage (11) auf dem mobilen Anzeigegerät (15) angezeigt wird, insbesondere unter Verwendung von anhand von Hardware-Parametern und/oder eines Zoom-Faktors bestimmten Anzeigeparametern.

8. Verfahren nach zumindest einem der vorstehenden Ansprüche,
**dadurch gekennzeichnet,**
**dass** die drahtlose Kommunikationsverbindung (13) eine drahtlose Netzwerkverbindung, insbesondere eine WLAN-Verbindung, unter Verwendung eines sicheren Netzwerkprotokolls, insbesondere HTTPS, ist.

9. Verfahren nach zumindest einem der vorstehenden Ansprüche,
**dadurch gekennzeichnet,**
**dass** die Kennung der Waage (11) und/oder das Wägeergebnis der Waage (11) über eine Webapplikation auf dem mobilen Anzeigegerät (15) angezeigt wird, wobei bevorzugt die Webapplikation in einem Webbrowser des mobilen Anzeigegeräts (15), insbesondere unter Verwendung eines Plug-ins, ausgeführt wird.

10. Verfahren nach zumindest einem der vorstehenden Ansprüche,
**dadurch gekennzeichnet,**
**dass** bei mehreren Waagen (11), mit denen das mobile Anzeigegerät (15) eine sichere drahtlose Kommunikationsverbindung (13) aufgebaut hat, die Kennungen aller Waagen (10), insbesondere in Form einer Liste, auf dem mobilen Anzeigegerät (15) angezeigt werden.

11. Verfahren nach Anspruch 10,
**dadurch gekennzeichnet,**
**dass** zur Auswahl einer Waage (11) eine der Kennung der auszuwählenden Waage (11) entsprechende oder eindeutig zugeordnete Kennzeichnung mittels eines von der sicheren drahtlosen Kommunikationsverbindung (13) separaten Mittels, insbesondere Bildverarbeitung oder Datenübertragung über kurze Distanz, von dem mobilen Anzeigegerät (15) empfangen wird, wobei bevorzugt die übermittelte Kennzeichnung mit den angezeigten Kennungen verglichen wird.

12. Verfahren nach Anspruch 10 oder 11,
**dadurch gekennzeichnet,**
**dass** nach Auswahl der Waage (11) nur der ausgewählten Waage (11) ermöglicht wird, ein Wägeergebnis auf dem mobilen Anzeigegerät (15) anzuzeigen.

13. Verfahren nach zumindest einem der Ansprüche 10 bis 12,
**dadurch gekennzeichnet,**
**dass** die Auswahl der Waage (11) änderbar ist.

14. Verfahren nach zumindest einem der vorstehenden Ansprüche,
**dadurch gekennzeichnet,**
**dass** das Wägeergebnis auf dem mobilen Anzeigegerät (15) als Barcode angezeigt wird.

15. Computerprogramm mit Programmcode-Mitteln, um das Verfahren nach einem der Ansprüche 1 bis 14 durchzuführen, wenn das Programm auf einem mobilen Anzeigegerät (15) ausgeführt wird.

## Claims

1. A method for displaying a weighing result of a scale (11), namely a store scale, on a mobile display device (15), the scale (11) having an identifier, in which method the mobile display device (15) establishes a secure, wireless communication connection (13) with the scale (11) and displays a weighing result of the scale (11) together with the identifier of the scale (11) after successfully establishing the connection, wherein the identifier is a unique ID which is assigned to the scale (11) and with reference to which the scale (11) is uniquely identifiable.

2. A method in accordance with claim 1,
**characterized in that**
a check is made whether the mobile display device (15) corresponds to a device model approved for a display of the weighing results satisfying predefined demands.

3. A method in accordance with claim 2,
**characterized in that**,
if the mobile display device (15) corresponds to an approved device model, it is made possible that a weighing result of the connected scale (11) is displayed on the mobile display device (15).

4. A method in accordance with claim 2 or claim 3,
**characterized in that**,
if the mobile display device (15) does not correspond to an approved device model, a check is made with reference to the hardware parameters of the mobile display device read out from the mobile display device (15) as to whether a display of the weighing results satisfying the predefined demands is possible on the mobile display device (15).

5. A method in accordance with claim 4,
**characterized in that**
a zoom factor is determined on the basis of the hardware parameters, with which zoom factor a display of the weighing results is possible which satisfies the predefined demands.

6. A method in accordance with at least one of the claims 2 to 5,
**characterized in that**,
if the mobile display device (15) does not correspond to an approved device model, a reference image is displayed on the mobile display device (15) and a zoom factor is determined on the basis of a comparison of the reference image with a real measure, with which zoom factor a display of the weighing results is possible which satisfies the predefined demands.

7. A method in accordance with at least one of the claims 4 to 6,
**characterized in that**,
if a display satisfying the predefined demands is possible, it is made possible that a weighing result of the connected scale (11) is displayed on the mobile display device (15), in particular using display parameters determined with reference to hardware parameters and/or with reference to a zoom factor.

8. A method in accordance with at least one of the preceding claims,
**characterized in that**
the wireless communication connection (13) is a wireless network connection, in particular a WLAN connection, using a secure network protocol, in particular HTTPS.

9. A method in accordance with at least one of the preceding claims,
**characterized in that**
the identifier of the scale (11) and/or the weighing result of the scale (11) is/are displayed via a web application on the mobile display device (15), with preferably the web application being executed in a web browser of the mobile display device (15), in particular using a plug-in.

10. A method in accordance with at least one of the preceding claims,
**characterized in that**,
with a plurality of scales (11) with which the mobile display device (15) has established a secure, wireless communication connection (13), the identifiers of all the scales (10) are displayed on the mobile display device (15), in particular in the form of a list.

11. A method in accordance with claim 10,
**characterized in that**,
for the selection of a scale (11), an identification corresponding to or uniquely associated with the identifier of the scale (11) to be selected is received by the mobile display device (15) by means of a means separate from the secure, wireless communication connection (13), in particular image processing or data transmission over a short distance, with preferably the transmitted identification being compared with the displayed identifiers.

12. A method in accordance with claim 10 or claim 11,
**characterized in that**,
after the selection of the scale (11), it is only made possible for the selected scale (11) to display a weighing result on the mobile display device (15).

13. A method in accordance with at least one of the claims 10 to 12, **characterized in that**
the selection of the scale (11) is changeable.

14. A method in accordance with at least one of the preceding claims, **characterized in that**
the weighing result is displayed as a barcode on the mobile display device (15).

15. A computer program comprising program code means to execute the method in accordance with any one of the claims 1 to 14 when the program is executed on a mobile display device (15).

## Revendications

1. Procédé d'affichage d'un résultat de pesée d'une balance (11), à savoir d'une balance de magasin, présentant un identifiant, sur un appareil d'affichage mobile (15), dans lequel l'appareil d'affichage mobile (15) établit une liaison de communication sans fil sécurisée (13) avec la balance (11) et, après établissement réussi de la liaison, il affiche un résultat de pesée de la balance (11) conjointement avec l'identifiant de la balance (11), l'identifiant étant un identifiant ID univoque associé à la balance (11), permettant d'identifier la balance (11) de manière univoque.

2. Procédé selon la revendication 1,
**caractérisé en ce que**
on vérifie si l'appareil d'affichage mobile (15) correspond à un modèle d'appareil homologué pour un affichage des résultats de pesée satisfaisant à des exigences prescrites.

3. Procédé selon la revendication 2,
**caractérisé en ce que**
dans la mesure où l'appareil d'affichage mobile (15) correspond à un modèle d'appareil homologué, ceci permet d'afficher un résultat de pesée de la balance connectée (11) sur l'appareil d'affichage mobile (15).

4. Procédé selon la revendication 2 ou 3,
**caractérisé en ce que**
dans la mesure où l'appareil d'affichage mobile (15) ne correspond pas à un modèle d'appareil homologué, on vérifie, à l'aide des paramètres matériels de l'appareil d'affichage mobile lus par l'appareil d'affichage mobile (15), si un affichage des résultats de pesée satisfaisant aux exigences prescrites sur l'appareil d'affichage mobile (15) est possible.

5. Procédé selon la revendication 4,
**caractérisé en ce que**
sur la base des paramètres matériels, un facteur de zoom est déterminé, avec lequel un affichage des résultats de pesée satisfaisant aux exigences prescrites est possible.

6. Procédé selon l'une au moins des revendications 2 à 5,
**caractérisé en ce que**
dans la mesure où l'appareil d'affichage mobile (15) ne correspond pas à un modèle d'appareil homologué, une image de référence est affichée sur l'appareil d'affichage mobile (15) et, sur la base d'une comparaison de l'image de référence avec une mesure réelle, un facteur de zoom est déterminé, avec lequel un affichage des résultats de pesée satisfaisant aux exigences prescrites est possible.

7. Procédé selon l'une au moins des revendications 4 à 6,
**caractérisé en ce que**
dans la mesure où un affichage satisfaisant aux exigences prescrites est possible, ceci permet d'afficher un résultat de pesée de la balance connectée (11) sur l'appareil d'affichage mobile (15), en particulier en utilisant des paramètres d'affichage déterminés à l'aide de paramètres matériels et/ou d'un facteur de zoom.

8. Procédé selon l'une au moins des revendications précédentes, **caractérisé en ce que**
la liaison de communication sans fil (13) est une liaison réseau sans fil, en particulier une liaison WLAN, utilisant un protocole réseau sécurisé, en particulier HTTPS.

9. Procédé selon l'une au moins des revendications précédentes, **caractérisé en ce que**
l'identifiant de la balance (11) et/ou le résultat de pesée de la balance (11) sont affichés sur l'appareil d'affichage mobile (15) via une application web, de préférence l'application web étant exécutée dans un navigateur web de l'appareil d'affichage mobile (15), en particulier en utilisant un plug-in.

10. Procédé selon l'une au moins des revendications précédentes, **caractérisé en ce que**
dans le cas de plusieurs balances (11) avec lesquelles l'appareil d'affichage mobile (15) a établi une liaison de communication sans fil sécurisée (13), les identifiants de toutes les balances (10) sont affichés sur l'appareil d'affichage mobile (15), en particulier sous la forme d'une liste.

11. Procédé selon la revendication 10,
**caractérisé en ce que**
pour sélectionner une balance (11), une identification correspondant ou associée univoquement à l'identifiant de la balance (11) à sélectionner est reçue par l'appareil d'affichage mobile (15) à l'aide d'un moyen distinct de la liaison de communication sans fil sécurisée (13), en particulier par traitement d'image ou transmission de données à courte distance, et, de préférence, l'identification transmise est comparée aux identifications affichées.

12. Procédé selon la revendication 10 ou 11,
**caractérisé en ce que**
après sélection de la balance (11), uniquement la balance sélectionnée (11) est autorisée d'afficher un résultat de pesée sur l'appareil d'affichage mobile (15).

13. Procédé selon l'une au moins des revendications 10 à 12,
**caractérisé en ce que**
la sélection de la balance (11) est modifiable.

14. Procédé selon l'une au moins des revendications précédentes, **caractérisé en ce que**
le résultat de pesée est affiché sur l'appareil d'affichage mobile (15) sous forme de code à barres.

15. Programme informatique comprenant des moyens de code de programme pour mettre en œuvre le procédé selon l'une des revendications 1 à 14, lorsque le programme est exécuté sur un appareil d'affichage mobile (15).
